# EUROPEAN PATENT APPLICATION

(11) **EP 4 776 634 A1**
(43) Date of publication of application: **15.07.2026**
(21) Application number: 24861948.8
(22) Date of filing: 03.09.2024
(51) Int. Cl.: H04N 21/4402

(54) **MEDIA CONTENT DISPLAY METHOD AND APPARATUS, ELECTRONIC DEVICE, AND STORAGE MEDIUM**

(30) Priority: 04.09.2023 CN 202311134594
(71) Applicant: Beijing Zitiao Network Technology Co., Ltd., Beijing 100190 (CN)
(72) Inventor: ZHAO, Jiarui, Beijing 100028 (CN); LI, Xin, Beijing 100028 (CN)
(74) Representative: Marks & Clerk LLP
(86) International application number: PCT/CN2024/116490
(87) International publication number: WO 2025/051105

(57) **Abstract**

Provided are a media content display method and apparatus, an electronic device, and a storage medium. The method comprises: displaying a target media content, wherein the target media content comprises multiple independent media resources, each media resource comprises at least one video and/or picture, and the multiple media resources are switched at an initial switching speed (S101); in response to a variable speed playback operation being received, determining a target switching speed of the multiple media resources corresponding to the variable speed playback operation, wherein the variable speed playback operation instructs to perform variable speed switching on the multiple media resources (S102); and switching and displaying the multiple media resources at the target switching speed (S103).

## Description

The present application claims priority to Chinese Patent Application No. 202311134594.0, filed on September 4, 2023, which is incorporated herein by reference in its entirety as part of the present application.

### TECHNICAL FIELD

Embodiments of the present disclosure relate to a media content display method and apparatus, an electronic device, and a storage medium.

### BACKGROUND

On the Internet, users can post media content via the Internet. Different media content may be sent to user terminals in the form of a media content feed for display. In the related art, when a user views a media content work including a plurality of images, the plurality of images in the media content may be switched and displayed at a specific display speed.

### SUMMARY

Embodiments of the present disclosure provide a media content display method and apparatus, an electronic device, and a storage medium.

According to a first aspect, an embodiment of the present disclosure provides a media content display method. The method includes: displaying target media content, where the target media content includes a plurality of independent media resources, each media resource includes at least one video and/or image, and the plurality of media resources are switched at an initial switching speed; determining, in response to receiving a variable-speed playback operation, a target switching speed of the plurality of media resources corresponding to the variable-speed playback operation, where the variable-speed playback operation indicates to perform variable-speed switching on the plurality of media resources; and switching and displaying the plurality of media resources at the target switching speed.

According to a second aspect, an embodiment of the present disclosure provides a media content display apparatus. The apparatus includes: a first display unit configured to display target media content, where the target media content includes a plurality of independent media resources, each media resource includes at least one video and/or image, and the plurality of media resources are switched at an initial switching speed; a determination unit configured to determine, in response to receiving a variable-speed playback operation, a target switching speed of the plurality of media resources corresponding to the variable-speed playback operation, where the variable-speed playback operation indicates to perform variable-speed switching on the plurality of media resources; and a second display unit configured to switch and display the plurality of media resources at the target switching speed.

According to a third aspect, an embodiment of the present disclosure provides an electronic device. The electronic device includes: a processor and a memory, where the memory has computer-executable instructions stored therein; and the processor executes the computer-executable instructions stored in the memory, to cause the at least one processor to perform the media content display method according to the first aspect and various possible designs of the first aspect.

According to a fourth aspect, an embodiment of the present disclosure provides a computer-readable storage medium storing computer-executable instructions that, when executed by a processor, cause the media content display method according to the first aspect and various possible designs of the first aspect to be implemented.

According to a fifth aspect, an embodiment of the present disclosure provides a computer program product including a computer program that, when executed by a processor, causes the media content display method according to the first aspect and various possible designs of the first aspect to be implemented.

### BRIEF DESCRIPTION OF DRAWINGS

In order to describe the technical solutions in embodiments of the present disclosure or in the conventional art more clearly, the accompanying drawings for describing the embodiments or the conventional art are briefly described below. Apparently, the accompanying drawings in the following description are some embodiments of the present disclosure, and those of ordinary skill in the art may still derive other accompanying drawings from these accompanying drawings without creative efforts.
Fig. 1 is a first schematic flowchart of a media content display method according to the present disclosure;
Fig. 2 is a schematic diagram of an application scenario;
Fig. 3 is a schematic diagram of an application scenario;
Fig. 4 is a second schematic flowchart of a media content display method according to the present disclosure;
Fig. 5 is a third schematic flowchart of a media content display method according to the present disclosure;
Fig. 6 is a schematic structural diagram of a media content display apparatus according to the present disclosure; and
Fig. 7 is a schematic diagram of a hardware structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It can be understood that before the use of the technical solutions disclosed in the embodiments of the present disclosure, a user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure. A client for displaying media content may be installed on a user terminal device. When the client is running, one or more pieces of multimedia content in a media feed may be displayed.

Each piece of media content may include text, an image, audio, and/or a video. Usually, the media content has a preset display speed. In the client, the media content may be displayed at the display speed. For some video content, users may have a need for high-speed playback.

However, for media content including a plurality of independent media resources (where the media resource may be an image, a video, or the like, and each media resource may be associated with a unique identifier), for example, an image collection work including a plurality of images, users are unable to perform variable-speed switching and display.

With the improvement in the information transmission capacity of the Internet, media content creators have incorporated an increasing number of independent media resources into the media content. For media content including a plurality of media resources, the plurality of media resources in the multimedia content may be displayed in a preset display order and at a specified switching-display speed. Some media resources include a large number of media resources, such as dozens of resources, and therefore, a user has a need for variable-speed playback of the media content including the plurality of media resources. However, the current playback of the plurality of media resources fails to meet the user's need, resulting in poor user experience.

The present disclosure provides a solution in which a variable-speed switching function is provided when media content including a plurality of media resources is displayed, enabling accelerated switching and display of the plurality of media resources. This achieves variable-speed switching and display of the media content including the plurality of media resources, allowing the user to quickly browse the plurality of media resources when viewing the media content, thereby improving the efficiency of the user in viewing the multimedia content.

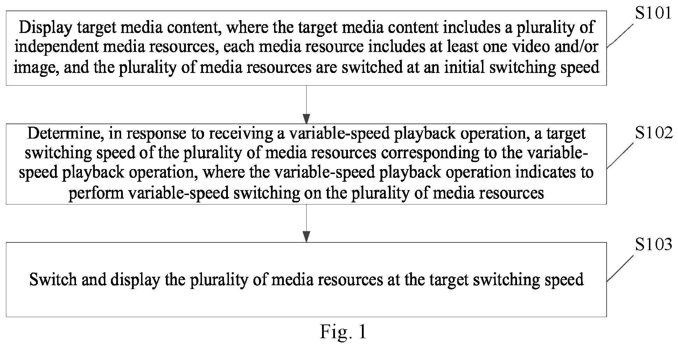

Fig. 1 is a first schematic diagram of a media content display method according to the present disclosure. As shown in Fig. 1, the method includes the following steps.

S101: display target media content, where the target media content includes a plurality of independent media resources, each media resource includes at least one video and/or image, and the plurality of media resources are switched at an initial switching speed. The initial switching speed may be a speed having a preset value, or a switching speed determined based on musical rhythm points (e.g., to achieve a beat-synchronized playback effect with varying intervals between the images). Alternatively, the initial switching speed may be zero, that is, the current media resource is maintained without automatic switching.

In this embodiment, an execution entity of the media content display method may be a terminal device, may specifically be a client running on the terminal device for displaying media content, or may be a server providing services for the client.

The following description is made by using an example in which the execution entity is the client for displaying media content.

When the client is running, the media content may be displayed in a display interface of the client.

In this embodiment, the target media content is not a whole video. The target media content includes the plurality of independent media resources. The media resources may be stored independently.

Each media resource includes a video and/or an image. Illustratively, one media resource includes one video clip A. Illustratively, one media resource includes at least one image B. Illustratively, one media resource includes one video clip C and at least one image D. The target media content includes two or more independent media resources, for example, dozens of media resources.

When the target media content is displayed, since the target media content includes the plurality of independent media resources, the plurality of independent media resources need to be switched and displayed. During normal display, the execution entity may switch and display the plurality of media resources at the initial switching speed. That is, for example, the initial switching speed is defined as switching one media resource per second.

In some embodiments, a display interface for displaying the media content including the plurality of media resources includes one of: a display interface for displaying media content in a media feed; a media details interface for displaying details of media content; or a clean-screen display interface that hides at least part of controls in an image of the media content.

In some application scenarios, the target media content is media content displayed in the display interface for displaying the media feed. That is, the media content is any one of a plurality of pieces of media content displayed in the feed form that includes a plurality of media resources.

In these application scenarios, when receiving no user operation for switching to other media content in the display interface, the execution entity may switch and display the plurality of media resources in the target media content at the initial switching speed. Illustratively, the plurality of media resources may be displayed in a carousel manner at the initial switching speed. That is, the plurality of media resources are displayed sequentially at the initial switching speed in a preset order of the plurality of media resources.

In other words, when the target media content including the plurality of media resources is displayed in the media feed, a variable-speed playback operation may be performed in the display interface for displaying the target media content, thereby enabling variable-speed switching of the plurality of media resources.

In some application scenarios, the display interface is the media content details interface for displaying details of the media content. The media content details interface may include a plurality of independent media resources, and may further include text content. In these application scenarios, the variable-speed playback operation may be performed on images of the media resources in the display interface for displaying the details of the media content, thereby enabling variable-speed switching of the plurality of media resources, while keeping the display of the text content unchanged.

In some application scenarios, the display interface is the clean-screen display interface that hides at least part of controls in the image of the media content. In these application scenarios, during the display of the target media content, a user performs a clean-screen display operation. After receiving the clean-screen display operation, the execution entity may hide at least part of the controls in the image of the target media content. In these application scenarios, the variable-speed playback operation may be performed in the clean-screen display interface when the target media content is displayed in the clean-screen display interface, thereby enabling accelerated switching and display of the plurality of media resources.

In these embodiments, the variable-speed switching and display of the plurality of media resources can be supported in different application scenarios, thereby enabling accelerated switching and display of the plurality of media resources in the target media content based on the variable-speed playback operation of the user in different browsing scenarios.

S102: determine, in response to receiving the variable-speed playback operation, a target switching speed of the plurality of media resources corresponding to the variable-speed playback operation, where the variable-speed playback operation indicates to perform variable-speed switching on the plurality of media resources.

In this embodiment, the user may perform the variable-speed playback operation when the target media content is displayed, where the variable-speed playback operation is used for indicating to perform the variable-speed switching on the plurality of media resources. After receiving the variable-speed playback operation, the execution entity may determine the target switching speed corresponding to the variable-speed playback operation. The user may perform the variable-speed playback operation in any manner in the display interface for displaying the target media content.

As an implementation, a variable-speed playback control may be displayed in the display interface, and the user may perform a trigger operation on the variable-speed playback control. In this example, the variable-speed playback operation is triggered by an operation on the variable-speed playback control in the display interface. In an example, the variable-speed playback control may have preset variable-speed information. In this example, the user may perform a trigger operation, such as tapping or touching, on the variable-speed playback control. After receiving the trigger operation, the execution entity may interpret this as receiving the variable-speed playback operation.

In some application scenarios, the display interface may include a plurality of variable-speed playback controls, which may include 1X, 2X, 3X, etc. Different playback speeds may be determined based on the received trigger operations from the user on the different variable-speed playback controls. For example, when the user performs the trigger operation on the 2X-speed control, the execution entity determines to perform 2X-speed playback.

In some application scenarios, a variable-speed playback control displayed in the display interface may be updated to another variable-speed control after being selected. For example, after the 2X-speed control is tapped, the variable-speed control is updated to 3X, and after 3X is tapped, the variable-speed control is updated to 1X.

In an example, the variable-speed playback control allows the user to set the variable-speed information. In this example, the user may set the variable-speed information through the variable-speed playback control. Illustratively, after setting the variable-speed playback information, the user performs the tapping or touching operation on a confirmation control. The execution entity may interpret this as receiving a variable-speed switching operation.

As an illustrative example, the variable-speed switching operation carries variable-speed switching information. The variable-speed switching information may be, for example, any instruction to switch and display the plurality of media resources at an Nx playback speed, where N is any value greater than 0. Illustratively, N is 0.5, 1, 2, 5, 10, etc. After the variable-speed switching operation is received, the target switching speed may be determined based on the variable-speed information carried in the variable-speed switching operation and the initial switching speed. For example, the target switching speed is obtained by multiplying the initial switching speed by N. In some embodiments, when the target media content is displayed in the form of a beat-synchronized playback effect, an audio playback rate may also be increased by N times after the variable-speed switching operation is received, to maintain the beat-synchronized playback effect simultaneously.

S103: switch and display the plurality of media resources at the target switching speed.

After obtaining the target switching speed in step S102, the execution entity may switch and display the plurality of independent media resources at the target switching speed. In this embodiment, the target media content is displayed, where the target media content includes the plurality of independent media resources, each media resource includes at least one video and/or image, and the plurality of media resources are switched at the initial switching speed. In response to receiving the variable-speed playback operation, the target switching speed of the plurality of media resources corresponding to the variable-speed playback operation is determined, where the variable-speed playback operation indicates to perform variable-speed switching on the plurality of media resources. The plurality of media resources are switched and displayed at the target switching speed. This achieves variable-speed switching of the plurality of media resources in the media content, allowing the user to quickly browse the plurality of media resources when viewing the media content, thereby improving the efficiency of the user in viewing the multimedia content.

In some embodiments, the variable-speed playback operation is triggered by a duration of a continuous operation on a preset region of a display interface exceeding a preset duration threshold. The display interface is used for displaying multimedia content.

The preset duration threshold may be any specified duration. Illustratively, the preset duration threshold may be 2 seconds, 5 seconds, etc. The preset duration threshold may be set depending on a specific application scenario, and is not limited herein.

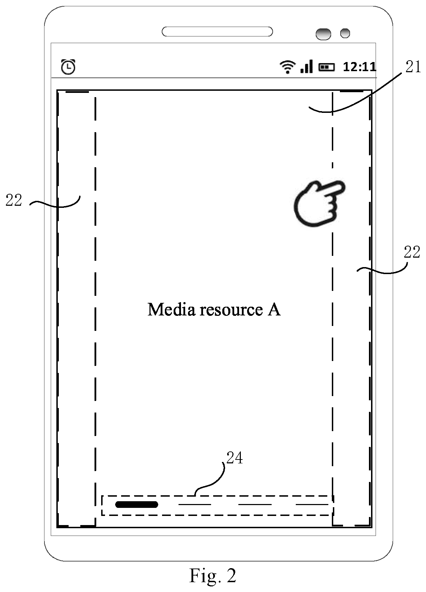

Fig. 2 is a schematic diagram of an application scenario. As shown in Fig. 2, the target media content may be displayed in the display interface 21 for displaying media content. The target media content includes a plurality of independent media resources. For example, the target media content may include media resources A, B, C, and D. When no variable-speed switching operation is received, the execution entity switches and displays the media resources A, B, C, and D at the initial switching speed.

As shown in Fig. 2, content of the media resource A is displayed on the current display interface 21, and the user may perform a long-press operation on a preset region 22 of the display interface, that is, the duration of the user's press operation on the preset region 22 exceeds the preset duration threshold. After receiving the long-press operation on the preset region 22 exceeding the preset duration threshold, the execution entity may interpret this as receiving the variable-speed switching operation. The target switching speed corresponding to the variable-speed switching operation may be determined. When the user continues performing the long-press operation, the plurality of media resources are switched and displayed at the target switching speed.

Further, the preset region is an edge region of the display interface, for example, a region within a specified threshold distance from the left and right sides of the interface.

In the display interface, a progress bar 24 for the playback of the plurality of media resources may be further displayed. The progress bar may display graphics representing the plurality of media resources, such as lines in the progress bar 24, where each line may correspond to one media resource. When one media resource is displayed in the display interface, a line corresponding to the media resource may be displayed in bold. As shown in Fig. 2, the graphic in the progress bar 24 that indicates the media resource A being displayed is displayed in bold.

In these examples, the width of the preset region may be dozens of pixels. As shown in Fig. 2, the preset region 22 is located in the left and right side regions of the display interface 21.

The side regions of the displayed media content serve as regions for triggering the variable-speed playback operation, which facilitates the user to initiate the variable-speed playback operation.

In some embodiments, the method further includes: switching and displaying the plurality of media resources at the initial switching speed or the target switching speed in response to determining that the variable-speed playback operation stops.

In some application scenarios, when it is determined that the variable-speed playback operation of the user stops and no operation information indicating to switch and display the plurality of media resources at the initial switching speed is received, the plurality of media resources may be switched and displayed at the initial switching speed, or the plurality of media resources may be switched and displayed at the target switching speed.

Illustratively, if the variable-speed switching and display is triggered by a continuous touch operation performed on the preset region, the plurality of media resources may be switched and displayed at the initial switching speed after the continuous touch operation ends.

In some application scenarios, the display interface for displaying media content is the clean-screen display interface. In the clean-screen display interface, at least part of the controls displayed on the image of the media content are hidden. The user performs the variable-speed playback operation in the clean-screen display interface, such that the plurality of media resources are switched and displayed at the target playback speed. In these application scenarios, switching and displaying the plurality of media resources at the initial switching speed or the target switching speed in response to determining that the variable-speed playback operation stops includes: switching and displaying the plurality of media resources at the target playback speed in response to receiving an exit from the clean-screen display interface, or switching and displaying the plurality of media resources at the initial switching speed in response to receiving an exit from the clean-screen display interface.

In these application scenarios, when the plurality of media resources are switched and displayed at the target switching speed based on the variable-speed playback operation in the clean-screen display interface, an operation to exit clean-screen display is received, thereby exiting the clean-screen display interface. When exiting the clean-screen display interface, it can be regarded as the end of the variable-speed playback operation.

In an example, after exiting the clean-screen display interface, the plurality of media resources may be switched and displayed at the target switching speed in the display interface for displaying media resources. This can ensure the continuity of switching and display settings of the user, preventing the user from performing the variable-speed playback operation again after exiting the clean-screen display.

In another example, after exiting the clean-screen display, the plurality of media resources may be switched and displayed at the initial switching speed in the display interface for displaying media resources. In this example, after the user exits the clean-screen display, switching and displaying the plurality of media resources at the initial switching speed enables continuous display of the plurality of media resources.

In some embodiments, the variable-speed playback operation is triggered by a duration of a continuous operation on a preset region of a display interface exceeding a preset duration threshold, and switching and displaying the plurality of media resources at the initial switching speed or the target switching speed in response to determining that the variable-speed playback operation stops includes: switching and displaying the plurality of media resources at the initial switching speed in response to determining that the continuous operation ends.

In these embodiments, the continuous operation may be a touch operation. After a continuous touch operation of the user on the preset region triggers the variable-speed playback operation, when the touch operation continues, the plurality of media resources may be switched and displayed at the target switching speed indicated by the variable-speed playback operation. After detecting that the continuous operation ends (e.g., the touch operation of the user ends, or the touch operation exits from the preset region, which may be interpreted as the end of the continuous operation), the execution entity may switch and display the plurality of media resources at the initial switching speed.

In these embodiments, after it is detected that the continuous operation ends, switching and displaying the plurality of media resources at the initial switching speed can reduce the user's need to perform a trigger operation on a control to indicate that the variable-speed playback ends to restore the initial switching speed. This provides convenience for the user to switch between variable-speed switching and display of the plurality of media resources and switching and display of the plurality of media resources at the initial switching speed.

In some embodiments, before step S102, the method further includes: displaying guidance information for guiding execution of the variable-speed playback operation.

In these embodiments, any guidance information may be displayed in the display interface for displaying media content, where the guidance information is used for guiding the user to perform the variable-speed playback operation. Illustratively, the guidance information may be overlaid on part of the display interface in the form of a floating window. The guidance information may include text and a graphic. The graphic may be, for example, an arrow graphic that points to the preset region for triggering the variable-speed playback operation or to the control for triggering the variable-speed playback. The text information may include any text content that prompts the user to perform the variable-speed playback operation. Illustratively, the text content includes, for example, "Press here for over 2s to enable variable-speed switching and display".

In some embodiments, the method further includes: displaying prompt information for indicating variable-speed switching and display during switching and displaying of the plurality of media resources at the target switching speed.

In these embodiments, during switching and displaying of the plurality of media resources at the target switching speed in the display interface for displaying media content, any prompt information for indicating the variable-speed switching and display may be displayed in the display interface.

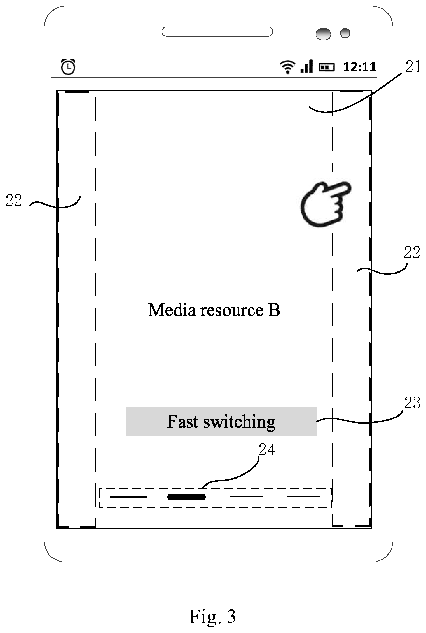

Referring to Fig. 2 and Fig. 3, Fig. 3 is a schematic diagram of an application scenario. In Fig. 2, when the media resource A is displayed in the display interface 21, if the touch operation performed by the user on the preset region 22 exceeds the preset duration threshold, the execution entity enters a display mode of switching and displaying the plurality of media resources at the target switching speed. The prompt information for indicating the variable-speed switching and display may be displayed in the display interface, for example, prompt information "Fast switching" 23 displayed in Fig. 3. Illustratively, the media resource B may be displayed in the display interface 21.

In the display interface, a progress bar 24 for the playback of the plurality of media resources may be further displayed. As shown in Fig. 2, the graphic (line) in the progress bar 24 indicating the media resource B being displayed is displayed in bold.

In these embodiments, the prompt information is displayed to prompt the user of a current mode of variable-speed switching display, thereby providing intuitive awareness of the current fast playback for the user.

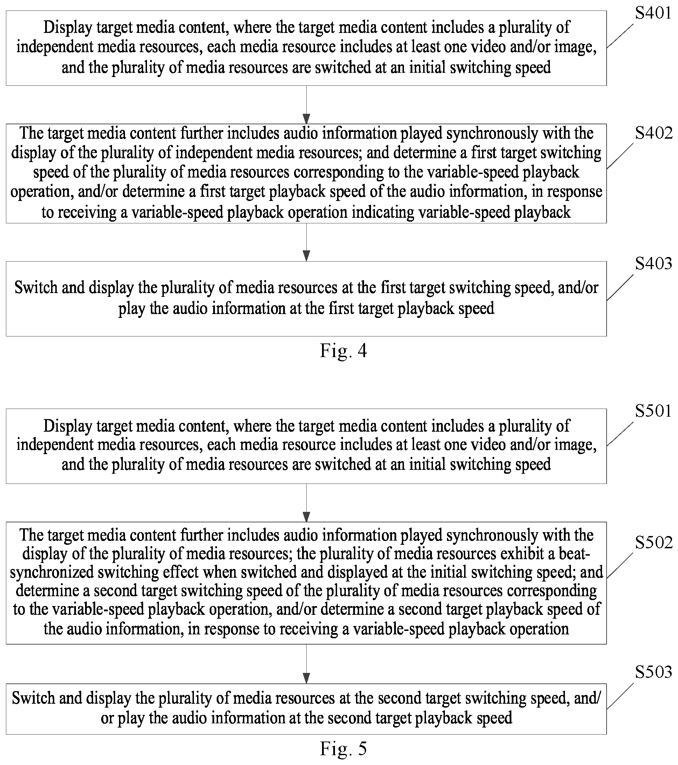

Referring to Fig. 4, Fig. 4 is a second schematic flowchart of a media content display method according to the present disclosure. As shown in Fig. 4, the method includes the following steps.

S401: display target media content, where the target media content includes a plurality of independent media resources, each media resource includes at least one video and/or image, and the plurality of media resources are switched at an initial switching speed.

For detailed implementation of step S401, reference may be made to the content of step S101 of the embodiment shown in Fig. 1, which will not be repeated here.

S402: the target media content further includes audio information played synchronously with the display of the plurality of independent media resources; determine a first target switching speed of the plurality of media resources corresponding to the variable-speed playback operation, and/or determine a first target playback speed of the audio information in response to receiving a variable-speed playback operation indicating variable-speed playback.

In this embodiment, an execution entity of the media content display method may be a terminal device, may specifically be a client running on the terminal device for displaying media content. Alternatively, the execution entity may be a server providing services for the client.

The media content further includes the audio information. The audio information may be played synchronously with the display of the plurality of media resources. For example, when the plurality of media resources are displayed at the initial switching speed in a display interface for displaying media content, the audio information may be played at an original playback speed.

When the media content is displayed in the display interface, in response to receiving the variable-speed playback operation, the first target switching speed corresponding to the variable-speed playback operation may be determined. The first target switching speed is used for switching and displaying the plurality of media resources. Illustratively, the first target switching speed may be greater than the initial switching speed. In some application scenarios, the variable-speed playback operation may correspond to a preset multiple. In these application scenarios, the first target switching speed may be determined based on the initial switching speed and the preset multiple. For example, the product of the initial switching speed and the preset multiple is used as the first target switching speed. Illustratively, the multiple may be greater than 1.

In an example, the preset multiple may be configured by a user. Therefore, the preset multiple can be determined based on the configuration by the user, and the first target switching speed can be determined based on the preset multiple configured by the user and the initial switching speed.

In an example, an audio multiple corresponding to the variable-speed playback operation may be preset. After the variable-speed playback operation is received, the first playback speed may be determined based on the preset audio multiple and the original playback speed of the audio information.

In some embodiments, the first target switching speed is a first preset multiple of the initial switching speed; and/or the first target playback speed is the first preset multiple of the original playback speed of the audio information.

In the above-mentioned embodiments, the same first preset multiple may be set for the plurality of media resources and the audio information in the media content. When the variable-speed playback operation is received, the product of the initial switching speed of the plurality of media resources and the first preset multiple may be determined as the first target switching speed. The product of the original playback speed of the audio information and the first preset multiple is used as the first target playback speed.

As an application scenario, when the media content is displayed, the media content may be displayed in a non-beat-synchronized mode in this application scenario. After the variable-speed playback operation is received, the first target switching speed may be determined as twice the initial switching speed of the current plurality of media resources. The first target playback speed is determined as twice the original playback speed of the audio information.

In these embodiments, after the variable-speed playback operation is received, the calculation for determining the first target switching speed and the first target playback speed can be simplified by determining the first target switching speed of the plurality of media resources and the first target playback speed of the audio information by using the first preset multiple for the plurality of media resources and the audio information. This helps quickly determine the first target switching speed and the first target playback speed, to achieve quick response to the variable-speed playback operation.

S403: Switch and display the plurality of media resources at the first target switching speed, and/or play the audio information at the first target playback speed.

The first target switching speed and/or the first target playback speed are determined in step S402, such that the plurality of media resources can be switched and displayed at the first target switching speed, and/or the audio information can be played at the first target playback speed.

When the plurality of media resources are switched and displayed at the first target switching speed and the audio information is played at the first target playback speed, a higher synchronization can be achieved between the variable-speed switching and display of the plurality of media resources and the variable-speed playback of the audio information.

Compared with the embodiment shown in Fig. 1, this embodiment describes the following steps for the media content including the audio information. After the variable-speed playback operation is received, the first target switching speed of the plurality of media resources and the first target playback speed of the audio information are determined. The media resources are switched and displayed at the first target switching speed and/or the audio information is played at the first playback speed, thereby switching and displaying the media resources at the determined switching speed and/or playing the audio information at the determined playback speed. When the media resources are switched and displayed at the first target switching speed and the audio information is played at the first playback speed, a good synchronization is achieved between the switching and display of the media resources and the playback of the audio information.

In some embodiments, in the media content display method according to the embodiment shown in Fig. 1, the media content further includes audio information played synchronously with the display of the plurality of media resources; the plurality of media resources exhibit a beat-synchronized switching effect when switched and displayed at the initial switching speed; and the method further includes: canceling the beat-synchronized switching effect during switching and displaying of the plurality of media resources at the target switching speed.

The beat-synchronized switching effect refers to synchronization between the switching of the media resources and the rhythm of the audio information. When the media resources are switched based on the rhythm of the audio information, the switching speed of the media resources is fast. If the original beat-synchronized switching effect is maintained, the switching and display speed of the media resources may become excessively fast, so that the duration of the media resources displayed cannot ensure the user can clearly view the content of the media resources.

In these embodiments, when the plurality of media resources are switched and displayed at the initial switching speed, in response to receiving the variable-speed playback operation, the beat-synchronized switching effect is canceled. This facilitates determining the switching speed for switching and displaying the media resources corresponding to the variable-speed playback operation, and/or the playback speed of the audio information corresponding to the variable-speed playback operation, thereby providing the user with an accelerated switching speed that allows clear viewing of the content of the plurality of media resources. In this way, on one hand, it achieves accelerated display of the plurality of media resources for the user, and on the other hand, it ensures that the user has sufficient time to clearly view the content of the plurality of media resources.

Referring to Fig. 5, Fig. 5 is a third schematic flowchart of a media content display method according to the present disclosure. As shown in Fig. 5, the method includes the following steps.

S501: display target media content, where the target media content includes a plurality of independent media resources, each media resource includes at least one video and/or image, and the plurality of media resources are switched at an initial switching speed.

For detailed implementation of step S501, reference may be made to the content of step S101 of the embodiment shown in Fig. 1, which will not be repeated here.

S502: the target media content further includes audio information played synchronously with the display of the plurality of media resources; the plurality of media resources exhibit a beat-synchronized switching effect when switched and displayed at the initial switching speed; and determine a second target switching speed of the plurality of media resources corresponding to the variable-speed playback operation, and/or determine a second target playback speed of the audio information, in response to receiving a variable-speed playback operation.

S503: switch and display the plurality of media resources at the second target switching speed, and/or play the audio information at the second target playback speed.

In this embodiment, an execution entity of the media content display method may be a terminal device, may specifically be a client running on the terminal device for displaying media content. Alternatively, the execution entity may be a server providing services for the client.

The media content further includes the audio information. The audio information may be played synchronously with the display of the plurality of media resources. For example, when the plurality of media resources are displayed at the initial switching speed in a display interface for displaying media content, the audio information may be played at an original playback speed. The plurality of media resources exhibit the beat-synchronized switching effect when switched and displayed at the initial switching speed.

The beat-synchronized switching effect refers to synchronization between the switching of the media resources and the rhythm of the audio information. When the media resources are switched based on the rhythm of the audio information, the switching speed of the media resources is fast.

When the media content is displayed in the display interface in the display mode of the beat-synchronized switching effect, in response to receiving the variable-speed playback operation, the second target switching speed corresponding to the variable-speed playback operation may be determined. The second target switching speed is used for switching and displaying the plurality of media resources.

The second playback speed corresponding to the variable-speed playback operation may be further determined. The second playback speed is used for playing the audio information.

As an implementation, the second target switching speed is a preset value, and/or the second target playback speed is a second preset multiple of an initial audio playback speed of the audio information.

In this implementation, the second target switching speed is the preset value. The preset value may be greater than the initial switching speed. Illustratively, the preset value may be, for example, two media resources per second.

The second playback speed may be, for example, 1.5 times the initial playback speed.

In this implementation, after the variable-speed operation is received, the second target switching speed of the preset value is set for the plurality of media resources and the second preset multiple is set for the audio information. This ensures that the display duration of each media resource is sufficient for the user to clearly view the content of the media resource. In addition, the playback of the audio information is also accelerated, such that the accelerated playback can also be ascertained from the audio information.

In this embodiment, for the media content including the plurality of media resources having the beat-synchronized playback effect, after the variable-speed playback operation is received, the second target switching speed of the plurality of media resources and/or the second target playback speed of the audio information are determined. The plurality of media resources are switched and displayed at the second target switching speed, and/or the audio information is played at the second target playback speed, facilitating the user to view each media resource after accelerated switching display.

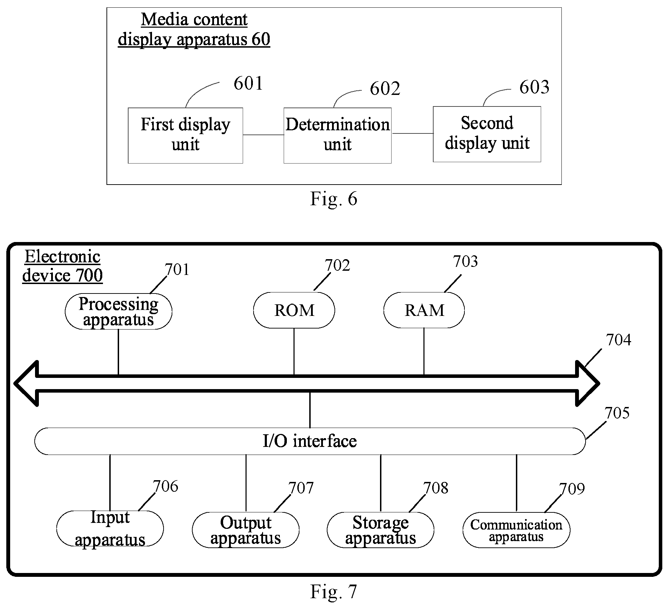

Corresponding to the media content display method described above in the embodiment shown in Fig. 1, Fig. 6 is a structural block diagram of a media content display apparatus according to an embodiment of the present disclosure. For ease of illustration, only parts related to this embodiment of the present disclosure are shown. Referring to Fig. 6, the apparatus 60 includes: a first display unit 601, a determination unit 602, and a second display unit 603.

The first display unit 601 is configured to display target media content, where the target media content includes a plurality of independent media resources, each media resource includes at least one video and/or image, and the plurality of media resources are switched at an initial switching speed.

The determination unit 602 is configured to determine, in response to receiving a variable-speed playback operation, a target switching speed of the plurality of media resources corresponding to the variable-speed playback operation, where the variable-speed playback operation indicates to perform variable-speed switching on the plurality of media resources.

The second display unit 603 is configured to switch and display the plurality of media resources at the target switching speed.

In some embodiments, the variable-speed playback operation is triggered by a duration of a continuous operation on a preset region of a display interface exceeding a preset duration threshold, where the display interface is used for displaying multimedia content; or the variable-speed playback operation is triggered by an operation on a variable-speed playback control in the display interface.

In some embodiments, the preset region is a side region of the display interface.

In some embodiments, the second display unit 603 is further configured to: display, during switching and displaying of the plurality of media resources at the target switching speed, prompt information for indicating variable-speed playback.

In some embodiments, the first display unit 601 is further configured to: before the determination unit determines, in response to receiving the variable-speed playback operation, the target switching speed of the plurality of media resources corresponding to the variable-speed playback operation, display guidance information for guiding execution of the variable-speed playback operation.

In some embodiments, the media content further includes audio information played synchronously with the display of the plurality of independent media resources; the determination unit 603 is further configured to: determine a first target switching speed of the plurality of media resources corresponding to the variable-speed playback operation, and/or determine a first target playback speed of the audio information, in response to receiving the variable-speed playback operation indicating the variable-speed playback; and the second display unit 603 is further configured to: switch and display the plurality of media resources at the first target switching speed, and/or play the audio information at the first target playback speed.

In some embodiments, the first target switching speed is a first preset multiple of the initial switching speed; and/or the first target playback speed is the first preset multiple of an original playback speed of the audio information.

In some embodiments, the media content further includes audio information played synchronously with the display of the plurality of media resources; the plurality of media resources exhibit a beat-synchronized switching effect when switched and displayed at the initial switching speed; and the second display unit 603 is further configured to: cancel the beat-synchronized switching effect during switching and displaying of the plurality of media resources at the target switching speed.

In some embodiments, the media content further includes audio information played synchronously with the display of the plurality of media resources; the plurality of media resources exhibit a beat-synchronized switching effect when switched and displayed at the initial switching speed; the determination unit 602 is further configured to: determine a second target switching speed of the plurality of media resources corresponding to the variable-speed playback operation, and/or determine a second target playback speed of the audio information, in response to receiving the variable-speed playback operation; and the second display unit 603 is further configured to: continue playing the plurality of media resources at the second target switching speed, and/or play the audio information at the second target playback speed.

In some embodiments, the second target switching speed is a preset value, and/or the second target playback speed is a second preset multiple of an initial audio playback speed of the audio information.

In some embodiments, a display interface for displaying the media content including the plurality of media resources includes one of: a display interface for displaying multimedia content in a media feed; a media details interface for displaying details including media content; or a clean-screen display interface that hides at least part of controls on an image of the media content.

In some embodiments, the second display unit 603 is further configured to: switch and display the plurality of media resources at the initial switching speed or the target switching speed in response to determining that the variable-speed playback operation stops.

In some embodiments, the plurality of media resources are switched and displayed at the target playback speed in a clean-screen display interface, and the second display unit 603 is further configured to: switch and display the plurality of media resources at the target playback speed in response to receiving an exit from the clean-screen display interface, or switch and display the plurality of media resources at the initial switching speed in response to receiving an exit from the clean-screen display interface.

In some embodiments, the variable-speed playback operation is triggered by a duration of a continuous operation on a preset region of a display interface exceeding a preset duration threshold, and the second display unit is further configured to: switch and display the plurality of media resources at the initial switching speed in response to determining that the continuous operation ends.

In order to implement the above-mentioned embodiments, an embodiment of the present disclosure further provides an electronic device.

Fig. 7 is a schematic structural diagram of an electronic device 700 suitable for implementing the embodiments of the present disclosure. The electronic device 700 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in Fig. 7 is merely an example, and shall not impose any limitation on the function and scope of use of the embodiments of the present disclosure.

As shown in Fig. 7, the electronic device 700 may include a processing apparatus (for example, a central processing unit or a graphics processing unit) 701 that may perform a variety of appropriate actions and processing based on a program stored in a read-only memory (ROM) 702 or a program loaded from a storage apparatus 708 into a random-access memory (RAM) 703. The RAM 703 further stores various programs and data required for the operation of the electronic device 700. The processing apparatus 701, the ROM 702, and the RAM 703 are connected to one another through a bus 704. An input/output (I/O) interface 705 is also connected to the bus 704.

Generally, the following apparatus may be connected to the I/O interface 705: an input apparatus 706 including, for example, a touchscreen, a touchpad, a keyboard, a mouse, a camera, a microphone, an accelerometer, and a gyroscope; an output apparatus 707 including, for example, a liquid crystal display (LCD), a speaker, and a vibrator; the storage apparatus 708 including, for example, a magnetic tape and a hard disk drive; and a communication apparatus 709. The communication apparatus 709 may allow the electronic device 700 to perform wireless or wired communication with other devices to exchange data. Although Fig. 7 shows the electronic device 700 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 709, installed from the storage apparatus 708, or installed from the ROM 702. When the computer program is executed by the processing apparatus 701, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases. For example, a first display unit may alternatively be described as "a unit for displaying target media content".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, a media content display method is provided. The method includes: displaying target media content, where the target media content includes a plurality of independent media resources, each media resource includes at least one video and/or image, and the plurality of media resources are switched at an initial switching speed; determining, in response to receiving a variable-speed playback operation, a target switching speed of the plurality of media resources corresponding to the variable-speed playback operation, where the variable-speed playback operation indicates to perform variable-speed switching on the plurality of media resources; and switching and displaying the plurality of media resources at the target switching speed.

According to one or more embodiments of the present disclosure, the variable-speed playback operation is triggered by a duration of a continuous operation on a preset region of a display interface exceeding a preset duration threshold, where the display interface is used for displaying multimedia content; or the variable-speed playback operation is triggered by an operation on a variable-speed playback control in the display interface.

According to one or more embodiments of the present disclosure, the preset region is a side region of the display interface.

According to one or more embodiments of the present disclosure, the method further includes: displaying, during switching and displaying of the plurality of media resources at the target switching speed, prompt information for indicating variable-speed playback.

According to one or more embodiments of the present disclosure, before determining, in response to receiving the variable-speed playback operation, the target switching speed of the plurality of media resources corresponding to the variable-speed playback operation, the method further includes: displaying guidance information for guiding execution of the variable-speed playback operation.

According to one or more embodiments of the present disclosure, the media content further includes audio information played synchronously with the display of the plurality of independent media resources; determining, in response to receiving the variable-speed playback operation, the target switching speed of the plurality of media resources corresponding to the variable-speed playback operation includes: determining a first target switching speed of the plurality of media resources corresponding to the variable-speed playback operation, and/or determining a first target playback speed of the audio information, in response to receiving the variable-speed playback operation indicating the variable-speed playback; and switching and displaying the plurality of media resources at the target switching speed includes: switching and displaying the plurality of media resources at the first target switching speed, and/or playing the audio information at the first target playback speed.

According to one or more embodiments of the present disclosure, the first target switching speed is a first preset multiple of the initial switching speed; and/or the first target playback speed is the first preset multiple of an original playback speed of the audio information.

According to one or more embodiments of the present disclosure, the media content further includes audio information played synchronously with the display of the plurality of media resources; the plurality of media resources exhibit a beat-synchronized switching effect when switched and displayed at the initial switching speed; and the beat-synchronized switching effect is canceled during switching and displaying of the plurality of media resources at the target switching speed.

According to one or more embodiments of the present disclosure, the media content further includes audio information played synchronously with the display of the plurality of media resources; the plurality of media resources exhibit a beat-synchronized switching effect when switched and displayed at the initial switching speed, and determining, in response to receiving the variable-speed playback operation, the target switching speed of the plurality of media resources corresponding to the variable-speed playback operation includes: determining a second target switching speed of the plurality of media resources corresponding to the variable-speed playback operation, and/or determining a second target playback speed of the audio information, in response to receiving the variable-speed playback operation; and switching and displaying the plurality of media resources at the target switching speed includes: continuing playing the plurality of media resources at the second target switching speed, and/or playing the audio information at the second target playback speed.

According to one or more embodiments of the present disclosure, the second target switching speed is a preset value, and/or the second target playback speed is a second preset multiple of an initial audio playback speed of the audio information.

According to one or more embodiments of the present disclosure, a display interface for displaying the media content including the plurality of media resources includes one of: a display interface for displaying multimedia content in a media feed; a media details interface for displaying details including media content; or a clean-screen display interface that hides at least part of controls on an image of the media content.

According to one or more embodiments of the present disclosure, the method further includes: switching and displaying the plurality of media resources at the initial switching speed or the target switching speed in response to determining that the variable-speed playback operation stops.

According to one or more embodiments of the present disclosure, the plurality of media resources are switched and displayed at the target playback speed in a clean-screen display interface, and switching and displaying the plurality of media resources at the initial switching speed or the target switching speed in response to determining that the variable-speed playback operation stops includes: switching and displaying the plurality of media resources at the target playback speed in response to receiving an exit from the clean-screen display interface, or switching and displaying the plurality of media resources at the initial switching speed in response to receiving an exit from the clean-screen display interface.

According to one or more embodiments of the present disclosure, the variable-speed playback operation is triggered by a duration of a continuous operation on a preset region of a display interface exceeding a preset duration threshold, and switching and displaying the plurality of media resources at the initial switching speed or the target switching speed in response to determining that the variable-speed playback operation stops includes: switching and displaying the plurality of media resources at the initial switching speed in response to determining that the continuous operation ends.

In a second aspect, according to one or more embodiments of the present disclosure, a media content display apparatus is provided. The apparatus includes: a first display unit configured to display target media content, where the target media content includes a plurality of independent media resources, each media resource includes at least one video and/or image, and the plurality of media resources are switched at an initial switching speed;
a determination unit configured to determine, in response to receiving a variable-speed playback operation, a target switching speed of the plurality of media resources corresponding to the variable-speed playback operation, where the variable-speed playback operation indicates to perform variable-speed switching on the plurality of media resources; and a second display unit configured to switch and display the plurality of media resources at the target switching speed.

According to one or more embodiments of the present disclosure, the variable-speed playback operation is triggered by a duration of a continuous operation on a preset region of a display interface exceeding a preset duration threshold, where the display interface is used for displaying multimedia content; or the variable-speed playback operation is triggered by an operation on a variable-speed playback control in the display interface.

According to one or more embodiments of the present disclosure, the preset region is a side region of the display interface.

According to one or more embodiments of the present disclosure, the second display unit is further configured to: display, when switching and displaying the plurality of media resources at the target switching speed, prompt information for indicating variable-speed playback.

According to one or more embodiments of the present disclosure, the first display unit is further configured to: before the determination unit determines, in response to receiving the variable-speed playback operation, the target switching speed of the plurality of media resources corresponding to the variable-speed playback operation, display guidance information for guiding execution of the variable-speed playback operation.

According to one or more embodiments of the present disclosure, the media content further includes audio information played synchronously with the display of the plurality of independent media resources; the determination unit is further configured to: determine a first target switching speed of the plurality of media resources corresponding to the variable-speed playback operation, and/or determine a first target playback speed of the audio information, in response to receiving the variable-speed playback operation indicating the variable-speed playback; and the second display unit is further configured to: switch and display the plurality of media resources at the first target switching speed, and/or play the audio information at the first target playback speed.

According to one or more embodiments of the present disclosure, the first target switching speed is a first preset multiple of the initial switching speed; and/or, the first target playback speed is the first preset multiple of an original playback speed of the audio information.

According to one or more embodiments of the present disclosure, the media content further includes audio information played synchronously with the display of the plurality of media resources; the plurality of media resources exhibit a beat-synchronized switching effect when switched and displayed at the initial switching speed; and the second display unit is further configured to: cancel the beat-synchronized switching effect during switching and displaying of the plurality of media resources at the target switching speed.

According to one or more embodiments of the present disclosure, the media content further includes audio information played synchronously with the display of the plurality of media resources; the plurality of media resources exhibit a beat-synchronized switching effect when switched and displayed at the initial switching speed; the determination unit is further configured to: determine a second target switching speed of the plurality of media resources corresponding to the variable-speed playback operation, and/or determine a second target playback speed of the audio information, in response to receiving the variable-speed playback operation; and the second display unit is further configured to: continue playing the plurality of media resources at the second target switching speed, and/or play the audio information at the second target playback speed.

According to one or more embodiments of the present disclosure, the second target switching speed is a preset value, and/or the second target playback speed is a second preset multiple of an initial audio playback speed of the audio information.

According to one or more embodiments of the present disclosure, a display interface for displaying the media content including the plurality of media resources includes one of: a display interface for displaying multimedia content in a media feed; a media details interface for displaying details including media content; or a clean-screen display interface that hides at least part of controls on an image of the media content.

According to one or more embodiments of the present disclosure, the second display unit is further configured to: switch and display the plurality of media resources at the initial switching speed or the target switching speed in response to determining that the variable-speed playback operation stops.

According to one or more embodiments of the present disclosure, the plurality of media resources are switched and displayed at the target playback speed in a clean-screen display interface, and the second display unit is further configured to: switch and display the plurality of media resources at the target playback speed in response to receiving an exit from the clean-screen display interface, or switch and display the plurality of media resources at the initial switching speed in response to receiving an exit from the clean-screen display interface.

According to one or more embodiments of the present disclosure, the variable-speed playback operation is triggered by a duration of a continuous operation on a preset region of a display interface exceeding a preset duration threshold, and the second display unit is further configured to: switch and display the plurality of media resources at the initial switching speed in response to determining that the continuous operation ends.

In a third aspect, according to one or more embodiments of the present disclosure, an electronic device is provided. The electronic device includes: at least one processor and a memory, where the memory stores computer-executable instructions; and the at least one processor executes the computer-executable instructions stored in the memory, to cause the at least one processor to perform the media content display method according to the first aspect and various possible designs of the first aspect.

In a fourth aspect, according to one or more embodiments of the present disclosure, a computer-readable storage medium is provided. The computer-readable storage medium has computer-executable instructions stored therein that, when executed by a processor, cause the media content display method according to the first aspect and various possible designs of the first aspect to be implemented.

In a fifth aspect, according to one or more embodiments of the present disclosure, a computer program product is provided. The computer program product includes a computer program that, when executed by a processor, causes the media content display method according to the first aspect and various possible designs of the first aspect to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A media content display method, comprising:
displaying target media content, wherein the target media content comprises a plurality of independent media resources, the plurality of media resources respectively comprises at least one video and/or image, and the plurality of media resources are switched at an initial switching speed;
determining, in response to receiving a variable-speed playback operation, a target switching speed of the plurality of media resources corresponding to the variable-speed playback operation, wherein the variable-speed playback operation indicates to perform variable-speed switching on the plurality of media resources; and
switching and displaying the plurality of media resources at the target switching speed.

2. The method according to claim 1, wherein
the variable-speed playback operation is triggered by a duration of a continuous operation on a preset region of a display interface exceeding a preset duration threshold, wherein the display interface is configured for displaying the target media content; or
the variable-speed playback operation is triggered based on a variable-speed playback control in the display interface.

3. The method according to claim 2, wherein the preset region is a side region of the display interface.

4. The method according to any one of claims 1 to 3, further comprising:
displaying prompt information for indicating variable-speed playback when switching and displaying the plurality of media resources at the target switching speed.

5. The method according to any one of claims 1 to 4, wherein before determining, in response to receiving the variable-speed playback operation, the target switching speed of the plurality of media resources corresponding to the variable-speed playback operation, the method further comprises:
displaying guidance information for guiding execution of the variable-speed playback operation.

6. The method according to any one of claims 1 to 5, wherein the target media content further comprises audio information played synchronously with the display of the plurality of independent media resources;
determining, in response to receiving the variable-speed playback operation, the target switching speed of the plurality of media resources corresponding to the variable-speed playback operation comprises:
determining a first target switching speed of the plurality of media resources corresponding to the variable-speed playback operation, and/or determining a first target playback speed of the audio information, in response to receiving the variable-speed playback operation indicating to perform the variable-speed playback; and
switching and displaying the plurality of media resources at the target switching speed comprises:
switching and displaying the plurality of media resources at the first target switching speed, and/or playing the audio information at the first target playback speed.

7. The method according to claim 6, wherein the first target switching speed is a first preset multiple of the initial switching speed; and/or
the first target playback speed is the first preset multiple of an original playback speed of the audio information.

8. The method according to any one of claims 1 to 5, wherein the target media content further comprises audio information played synchronously with the display of the plurality of media resources; the plurality of media resources exhibit a beat-synchronized switching effect when switched and displayed at the initial switching speed; and
the beat-synchronized switching effect is canceled when switching and displaying the plurality of media resources at the target switching speed.

9. The method according to any one of claims 1 to 5, wherein the target media content further comprises audio information played synchronously with the display of the plurality of media resources; the plurality of media resources exhibit a beat-synchronized switching effect when switched and displayed at the initial switching speed;
determining, in response to receiving the variable-speed playback operation, the target switching speed of the plurality of media resources corresponding to the variable-speed playback operation comprises:
determining a second target switching speed of the plurality of media resources corresponding to the variable-speed playback operation, and/or determining a second target playback speed of the audio information, in response to receiving the variable-speed playback operation; and
switching and displaying the plurality of media resources at the target switching speed comprises:
switching and displaying the plurality of media resources at the second target switching speed, and/or playing the audio information at the second target playback speed.

10. The method according to claim 9, wherein the second target switching speed is a preset value, and/or the second target playback speed is a second preset multiple of an initial audio playback speed of the audio information.

11. The method according to any one of claims 1 to 10, wherein a display interface for displaying the target media content comprising the plurality of media resources comprises one of:
a display interface for displaying media content in a media feed;
a media details interface for displaying details of media content;
a clean-screen display interface that hides at least part of controls in an image of the target media content.

12. The method according to any one of claims 1 to 11, further comprising:
switching and displaying the plurality of media resources at the initial switching speed or the target switching speed in response to determining that the variable-speed playback operation stops.

13. The method according to claim 12, wherein the plurality of media resources are switched and displayed at the target playback speed in a clean-screen display interface, and switching and displaying the plurality of media resources at the initial switching speed or the target switching speed in response to determining that the variable-speed playback operation stops comprises:
switching and displaying the plurality of media resources at the target playback speed in response to receiving an exit from the clean-screen display interface, or switching and displaying the plurality of media resources at the initial switching speed in response to receiving an exit from the clean-screen display interface.

14. The method according to claim 12 or 13, wherein the variable-speed playback operation is triggered by a duration of a continuous operation on a preset region of a display interface exceeding a preset duration threshold, and switching and displaying the plurality of media resources at the initial switching speed or the target switching speed in response to determining that the variable-speed playback operation stops comprises:
switching and displaying the plurality of media resources at the initial switching speed in response to determining that the continuous operation ends.

15. A media content display apparatus, comprising:
a first display unit configured to display target media content, wherein the target media content comprises a plurality of independent media resources, the plurality of media resources respectively comprises at least one video and/or image, and the plurality of media resources are switched at an initial switching speed;
a determination unit configured to determine, in response to receiving a variable-speed playback operation, a target switching speed of the plurality of media resources corresponding to the variable-speed playback operation, wherein the variable-speed playback operation indicates to perform variable-speed switching on the plurality of media resources; and
a second display unit configured to switch and display the plurality of media resources at the target switching speed.

16. The media content display apparatus according to claim 15, wherein the first display unit is further configured to: before the determination unit determines the target switching speed of the plurality of media resources corresponding to the variable-speed playback operation in response to receiving the variable-speed playback operation, display guidance information for guiding execution of the variable-speed playback operation.

17. The media content display apparatus according to claim 15 or 16, wherein the second display unit is further configured to display, when switching and displaying of the plurality of media resources at the target switching speed, prompt information for indicating variable-speed playback.

18. The media content display apparatus according to any one of claims 15 to 17, wherein the target media content further comprises audio information played synchronously with the display of the plurality of independent media resources; and
the determination unit is specifically configured to: determine a first target switching speed of the plurality of media resources corresponding to the variable-speed playback operation, and/or determine a first target playback speed of the audio information, in response to receiving the variable-speed playback operation indicating to perform the variable-speed playback.

19. An electronic device, comprising: a processor and a memory, wherein
the memory has computer-executable instructions stored therein; and
the processor executes the computer-executable instructions stored in the memory, to cause the processor to perform the media content display method according to any one of claims 1 to 14.

20. A computer-readable storage medium having computer-executable instructions stored therein that, when executed by a processor, cause the media content display method according to any one of claims 1 to 14 to be implemented.
